# EUROPEAN PATENT SPECIFICATION

(11) **EP 2 715 769 B1**
(45) Date of publication and mention of the grant of the patent: **07.07.2021**
(21) Application number: 12737595.4
(22) Date of filing: 30.05.2012
(51) Int. Cl.: H01J 49/00

(54) **REMOVAL OF IONS FROM SURVEY SCANS USING VARIABLE WINDOW BAND-PASS FILTERING TO IMPROVE INTRASCAN DYNAMIC RANGE**
ENTFERNUNG VON IONEN AUS UNTERSUCHUNGSSCANS UNTER VERWENDUNG EINER BANDPASSFILTERUNG MIT VERÄNDERLICHEM FENSTER ZUR VERBESSERUNG DES DYNAMIKBEREICHS ZWISCHEN SCANS
EXTRACTION D'IONS DE BALAYAGES DE SONDAGE PAR FILTRAGE PASSE-BANDE À FENÊTRE VARIABLE POUR AMÉLIORER LA PLAGE DYNAMIQUE DANS LE BALAYAGE

(30) Priority: 03.06.2011 US 201161493364 P
(43) Date of publication of application: 09.04.2014
(73) Proprietor: DH Technologies Development Pte. Ltd., Singapore 739256 (SG)
(72) Inventor: TATE, Stephen, A., Barre, Ontario L4M 7K4 (CA); BLOOMFIELD, Nic, G., Newmarket, Ontario L3K 2K4 (CA)
(74) Representative: J A Kemp LLP
(86) International application number: PCT/IB2012/001054
(87) International publication number: WO 2012/164378

(56) References cited:
- EP-A2- 0 298 608
- WO-A2-2006/129083
- GB-A- 2 388 704
- US-A1- 2002 063 205
- US-A1- 2011 057 095
- KATHLEEN E. SINGLETON ET AL: "Utilization of natural isotopic abundance ratios in tandem mass spectrometry", ANALYTICAL CHEMISTRY, vol. 55, no. 4, 1 April 1983 (1983-04-01), pages 762-764, XP55043881, ISSN: 0003-2700, DOI: 10.1021/ac00255a039
- J. Throck Watson, O. David Sparkman: "Introduction to Mass Spectrometry", 2007, John Wiley & Sons, Ltd, Chichester, West Sussex, England, XP002686976, ISBN: 978-0-470-51634-8 pages 184-191, page 184 - page 191; figure 3.5

## Description

The detector sub-system of a mass analyzer of a tandem mass spectrometer can experience saturation. For example, saturation can occur when a total ion count rate of the detection sub-system is exceeded. Saturation can also occur when the intensity of a single ion peak exceeds a threshold intensity of the detection sub-system.

Tandem mass spectrometers have employed various methods to remove saturation when it is detected. One method, for example, is to automatically attenuate the ion beam under programmatic control. When saturation is detected, the ion beam is attenuated between 1 % and 100% in response to the level of saturation, for example.

Preventing or avoiding saturation using an automatic method can also produce unwanted effects. For example, background ions can be very intense at the same point in liquid chromatography (LC) time as an ion of interest. The automatic method sees an intense ion, but cannot distinguish an intense background ion from an ion of interest. As a result, it attenuates the ion beam to protect the background ion from saturating. Meanwhile, the attenuation of the ion beam causes the intensity of the ion of interest to be reduced to a point where it is no longer detectable.

EP 0298608 A2 discloses a mass spectroscopy method employing measurement/survey scan strategy. Empty parts of the spectrum are identified in a survey scan and traversed faster in the actual measurement. Simply skipping empty parts of the spectrum is also discussed.

US 2011/057095 A1 discloses band pass filtering ions before introducing them into a TOF mass spectrometer in order to limit the ions hitting the detector to the range of interest. This has the purpose of preventing detector saturation by ions outside the range of interest.

US 2002/0063205 A1

US 2002/0063295 discloses attenuating ion beams when a detector is about to saturate or already saturated in order to generate accurate data. This is done dynamically based on the ongoing scan.

GB 2 288 704 A discloses assembling composite spectra from data measured at different sensitivities. When parts of the high sensitivity spectrum are saturated, the range in question is replaced by data measured at lower sensitivity.

The invention is defined in the claims.

The skilled artisan will understand that the drawings, described below, are for illustration purposes only. The drawings are not intended to limit the scope of the present teachings in any way.
Figure 1 is a block diagram that illustrates a computer system, upon which embodiments of the present teachings may be implemented.
Figure 2 is a schematic diagram showing a system for band-pass filtering ions from a mass range, in accordance with various embodiments.
Figure 3 is an exemplary flowchart showing a method for band-pass filtering ions from a mass range, in accordance with various embodiments.
Figure 4 is a schematic diagram of a system that includes one or more distinct software modules that performs a method for band-pass filtering ions from a mass range, in accordance with various embodiments.

Before one or more embodiments of the present teachings are described in detail, one skilled in the art will appreciate that the present teachings are not limited in their application to the details of construction, the arrangements of components, and the arrangement of steps set forth in the following detailed description or illustrated in the drawings. Also, it is to be understood that the phraseology and terminology used herein is for the purpose of description and should not be regarded as limiting.

### COMPUTER-IMPLEMENTED SYSTEM

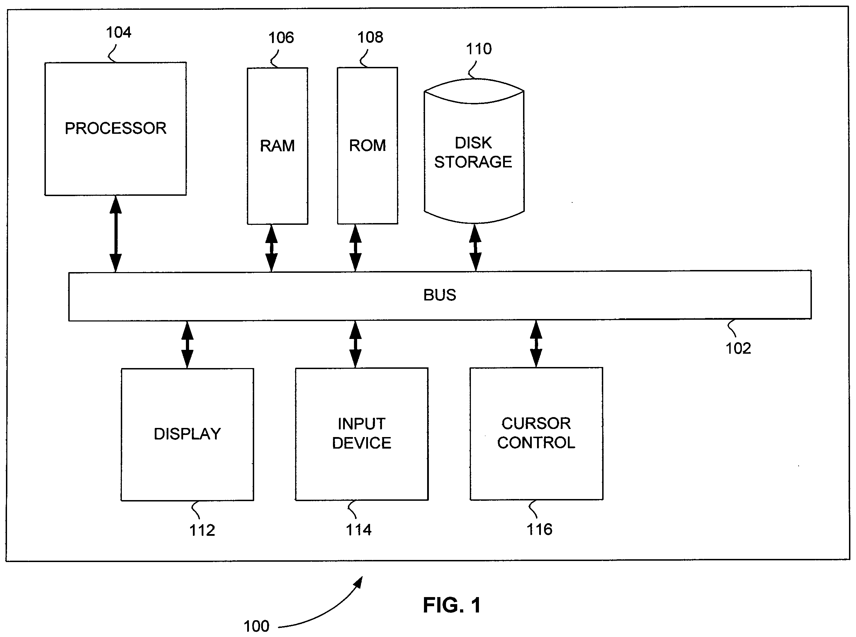

Figure 1 is a block diagram that illustrates a computer system 100, upon which embodiments of the present teachings may be implemented. Computer system 100 includes a bus 102 or other communication mechanism for communicating information, and a processor 104 coupled with bus 102 for processing information. Computer system 100 also includes a memory 106, which can be a random access memory (RAM) or other dynamic storage device, coupled to bus 102 for storing instructions to be executed by processor 104. Memory 106 also may be used for storing temporary variables or other intermediate information during execution of instructions to be executed by processor 104. Computer system 100 further includes a read only memory (ROM) 108 or other static storage device coupled to bus 102 for storing static information and instructions for processor 104. A storage device 110, such as a magnetic disk or optical disk, is provided and coupled to bus 102 for storing information and instructions.

Computer system 100 may be coupled via bus 102 to a display 1 12, such as a cathode ray tube (CRT) or liquid crystal display (LCD), for displaying information to a computer user. An input device 114, including alphanumeric and other keys, is coupled to bus 102 for communicating information and command selections to processor 104. Another type of user input device is cursor control 116, such as a mouse, a trackball or cursor direction keys for communicating direction information and command selections to processor 104 and for controlling cursor movement on display 1 12. This input device typically has two degrees of freedom in two axes, a first axis (*i.e.,* x) and a second axis (*i.e.,* y), that allows the device to specify positions in a plane.

A computer system 100 can perform the present teachings. Consistent with certain implementations of the present teachings, results are provided by computer system 100 in response to processor 104 executing one or more sequences of one or more instructions contained in memory 106. Such instructions may be read into memory 106 from another computer-readable medium, such as storage device 110. Execution of the sequences of instructions contained in memory 106 causes processor 104 to perform the process described herein. Alternatively hard-wired circuitry may be used in place of or in combination with software instructions to implement the present teachings. Thus implementations of the present teachings are not limited to any specific combination of hardware circuitry and software.

The term "computer-readable medium" as used herein refers to any media that participates in providing instructions to processor 104 for execution. Such a medium may take many forms, including but not limited to, non-volatile media, volatile media, and transmission media. Non-volatile media includes, for example, optical or magnetic disks, such as storage device 110. Volatile media includes dynamic memory, such as memory 106. Transmission media includes coaxial cables, copper wire, and fiber optics, including the wires that comprise bus 102.

Common forms of computer-readable media include, for example, a floppy disk, a flexible disk, hard disk, magnetic tape, or any other magnetic medium, a CD-ROM, digital video disc (DVD), a Blu-ray Disc, any other optical medium, a thumb drive, a memory card, a RAM, PROM, and EPROM, a FLASH-EPROM, any other memory chip or cartridge, or any other tangible medium from which a computer can read.

Various forms of computer readable media may be involved in carrying one or more sequences of one or more instructions to processor 104 for execution. For example, the instructions may initially be carried on the magnetic disk of a remote computer. The remote computer can load the instructions into its dynamic memory and send the instructions over a telephone line using a modem. A modem local to computer system 100 can receive the data on the telephone line and use an infra-red transmitter to convert the data to an infra-red signal. An infra-red detector coupled to bus 102 can receive the data carried in the infra-red signal and place the data on bus 102. Bus 102 carries the data to memory 106, from which processor 104 retrieves and executes the instructions. The instructions received by memory 106 may optionally be stored on storage device 110 either before or after execution by processor 104.

Instructions configured to be executed by a processor to perform a method are stored on a computer-readable medium. The computer-readable medium can be a device that stores digital information. For example, a computer-readable medium includes a compact disc read-only memory (CD-ROM) as is known in the art for storing software. The computer-readable medium is accessed by a processor suitable for executing instructions configured to be executed.

The following descriptions of various implementations of the present teachings have been presented for purposes of illustration and description. It is not exhaustive and does not limit the present teachings to the precise form disclosed. Modifications and variations are possible in light of the above teachings or may be acquired from practicing of the present teachings. Additionally, the described implementation includes software but the present teachings may be implemented as a combination of hardware and software or in hardware alone. The present teachings may be implemented with both object-oriented and non-object-oriented programming systems.

### SYSTEMS AND METHODS OF DATA PROCESSING

As described above, automatic methods have been developed to prevent or avoid saturation caused by the detector sub-system of a mass analyzer of a tandem mass spectrometer. Such automatic methods, however, can produce additional unwanted effects because they generally affect all ions equally. For example, an automatic method that attenuates the ion beam to remove the saturation of an intense background ion can result in the loss of the intensity from an ion of interest.

In various embodiments, ions that produce saturation are selectively removed or filtered in order to prevent ions of interest from being affected by a global automatic saturation detection and removal method. Essentially a prescan or a scan from a previous survey scan is used to identify ions for removal. One or more subsequent survey or scans are then used to remove the identified ions. In addition to removing ions that can produce saturation, this technique can also be used to remove ions previously analyzed or fragmented.

In a tandem mass spectrometer, a precursor ion is selected in a first mass analyzer and fragmented, and the fragments are analyzed in a second analyzer or in a second scan of the first analyzer. The fragment ion spectrum can be used to identify the molecule and the intensity of one or more fragments can be used to quantitate the amount of the compound present in a sample.

Typically, scans occur at uniform mass selection windows across a mass range. Recent developments in mass spectrometry hardware have, however, allowed the mass selection window width of a tandem mass spectrometer to be varied or set to any value instead of a single value across a mass range. For example, independent control of both the radio frequency (RF) and direct current (DC) voltages applied to a quadrupole mass filter can allow the selection of variable mass selection window widths. Any type of tandem mass spectrometer can allow the selection of variable mass selection window widths. A tandem mass spectrometer can include one or more physical mass analyzers that perform two or more mass analyses. A mass analyzer of a tandem mass spectrometer can include, but is not limited to, a time-of-flight (TOF), quadrupole, an ion trap, a linear ion trap, an orbitrap, or a Fourier transform mass spectrometer.

Scans with variable mass selection window widths are used to filter ions from regions of a mass range. A prescan of the full mass range is taken or a previous survey scan is used to produce a full spectrum for the mass range. Non-overlapping mass selection windows with variable mass selection window widths are then selected from the mass range. These mass selection windows are selected to either allow ions to be scanned and added to a band-pass spectrum or to prevent ions from being scanned and included in the band-pass spectrum.

Mass selection windows that are selected to allow ions to be scanned and added to the band-pass spectrum can include quiet regions of the full spectrum, for example. In addition to selecting the mass selection window for these quiet regions, other tuning parameter values for the mass spectrometer can also be selected. Tuning parameters for a mass spectrometer can include, but are not limited to, maximum intensity or total ion current. Different tuning parameter values can be selected for the scans of different mass selection windows.

Mass selection windows that are selected to prevent ions from being scanned and included in the band-pass spectrum include saturated regions of the full spectrum or regions that include ions that have previously been fragmented, for example. The intensity values for ions in these mass selection windows are prevented from being included in the band-pass spectrum by not performing a scan for these mass selection windows. Because a scan is not performed, the band-pass spectrum includes zero intensity values for these mass selection windows.

### Ion Filter System

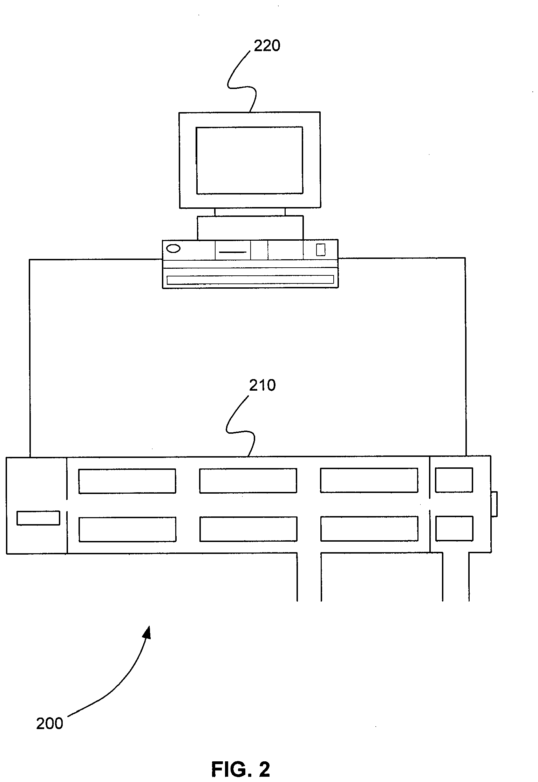

Figure 2 is a schematic diagram showing a system 200 for band-pass filtering ions from a mass range. System 200 includes tandem mass spectrometer 210 and processor 220. Processor 220 can be, but is not limited to, a computer, microprocessor, or any device capable of sending and receiving control signals and data from mass spectrometer 210 and processing data.

Tandem mass spectrometer 210 includes one or more physical mass analyzers that perform two or more mass analyses. A mass analyzer of a tandem mass spectrometer can include , but is not limited to, a time-of-flight (TOF), quadrupole, an ion trap, a linear ion trap, an orbitrap, or a Fourier transform mass analyzer. Tandem mass spectrometer 210 can also include a separation device (not shown). The separation device can perform a separation technique that includes, but is not limited to, liquid chromatography, gas chromatography, capillary electrophoresis, or ion mobility. Tandem mass spectrometer 210 can include separating mass spectrometry stages or steps in space or time, respectively.

Tandem mass spectrometer 210 includes a mass analyzer and can perform scans at different mass selection window widths using different tuning parameter values. Tandem mass spectrometer 210 performs a full scan of a mass range. The mass range can include, for example, a preferred mass range of the sample or the entire mass range of the sample. The full scan can include, but is not limited to, a prescan or a previous survey scan.

Processor 220 is in communication with tandem mass spectrometer 210. Processor 220 receives a full spectrum for the full scan from tandem mass spectrometer 210. Processor 220 selects a first mass selection window of the full spectrum and selects a first set of tuning parameter values. Processor 220 instructs tandem mass spectrometer 210 to perform a first scan of the first mass selection window using the first set of tuning parameter values. Processor 220 receives a first spectrum for the first scan from tandem mass spectrometer 210. Finally, processor 220 creates a band-pass filtered spectrum for the mass range that includes values from the first spectrum for the first mass selection window of the mass range.

System 200 can be used to band-pass filter ions from two or more mass selection windows across the mass range. For example, processor 220 further selects one or more additional mass selection windows of the full spectrum and selects one or more additional sets of tuning parameter values. The first mass selection window and the one or more additional mass selection windows do not overlap in the full spectrum. Processor 220 instructs the tandem mass spectrometer to perform one or more scans of the one or more additional mass selection windows using the one or more additional sets of tuning parameter values. Processor 220 receives one or more spectra for the one or more scans from the tandem mass spectrometer. Processor 220 adds to the band-pass filtered spectrum values from the one or more spectra for the one or more additional mass selection windows of the mass range.

Sytem 200 is used to filter out ions from a mass selection window between two band-pass mass selection windows. For example, processor 220 further selects a second mass selection window of the full spectrum and selects a second set of tuning parameter values. The first mass selection window and the second mass selection window do not overlap in the full spectrum. Processor 220 instructs tandem mass spectrometer 210 to perform a second scan of the second mass selection window using the second set of tuning parameter values. Processor 220 receives a second spectrum for the second scan from tandem mass spectrometer 210. Finally, processor 220 adds to the band-pass filtered spectrum values from the second spectrum for the second mass selection window of the mass range.

Scans for two or more mass selection windows across the mass range can include different tuning parameter values. For example, the first set of tuning parameter values and the second set of tuning parameter values described above do not share at least one value.

Processor 220 further selects a third mass selection window of the full spectrum between the first mass selection window and the second mass selection window. The third mass selection window can include a high intensity ion, a high ion count rate, or an ion from a list of previously fragmented ions, for example. Processor 220 adds to the band-pass filtered spectrum zero values for the third mass selection window of the mass range. The first mass selection window, the second mass selection window, and the third mass selection window do not have the same widths, for example.

### Ion Filter Method

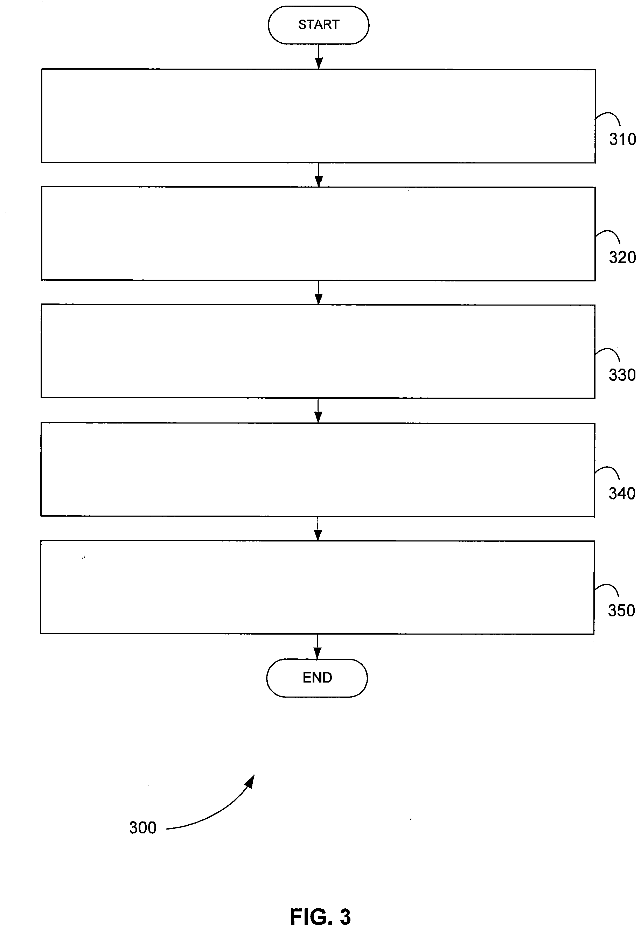

Figure 3 is an exemplary flowchart showing a method 300 for band-pass filtering ions from a mass range, given for illustration, but not according to the invention.

In step 310 of method 300, a full spectrum is received for a full scan of a mass range using a tandem mass spectrometer. The tandem mass spectrometer includes a mass analyzer and can perform scans at different mass selection window widths using different tuning parameter values.

In step 320, a first mass selection window of the full spectrum is selected and a first set of tuning parameter values is selected.

In step 330, the tandem mass spectrometer is instructed to perform a first scan of the first mass selection window using the first set of tuning parameter values.

In step 340, a first spectrum is received for the first scan from the tandem mass spectrometer.

In step 350, a band-pass filtered spectrum is created for the mass range that includes values from the first spectrum for the first mass selection window of the mass range.

### Ion Filter Computer Program Product

In various embodiments, a computer program product includes a tangible computer-readable storage medium whose contents include a program with instructions being executed on a processor so as to perform a method for band-pass filtering ions from a mass range. This method is performed by a system that includes one or more distinct software modules.

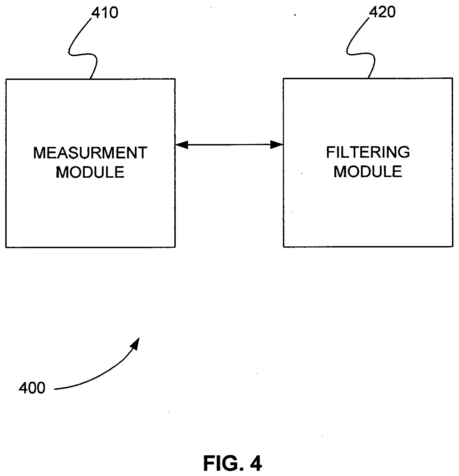

Figure 4 is a schematic diagram of a system 400 that includes one or more distinct software modules that performs a method for band-pass filtering ions from a mass range, in accordance with various embodiments. System 400 includes measurement module 410 and filtering module 420.

Measurement module 410 receives a full spectrum for a full scan of a mass range using a tandem mass spectrometer. The tandem mass spectrometer includes a mass analyzer and can perform scans at different mass selection window widths using different tuning parameter values. Filtering module 420 selects a first mass selection window of the full spectrum and selects a first set of tuning parameter values. Measurement module 410 instructs the tandem mass spectrometer to perform a first scan of the first mass selection window using the first set of tuning parameter values. Measurement module 410 receives a first spectrum for the first scan from the tandem mass spectrometer. Filtering module 420 creates a band-pass filtered spectrum for the mass range that includes values from the first spectrum for the first mass selection window of the mass range.

While the present teachings are described in conjunction with various embodiments, it is not intended that the present teachings be limited to such embodiments. On the contrary, the present teachings encompass various alternatives, modifications, and equivalents, as will be appreciated by those of skill in the art.

Further, in describing various embodiments, the specification may have presented a method and/or process as a particular sequence of steps. However, to the extent that the method or process does not rely on the particular order of steps set forth herein, the method or process should not be limited to the particular order of steps described. Therefore, the particular order of the steps set forth in the specification should not be construed as limitations on the claims. In addition, the claims directed to the method and/or process should not be limited to the performance of their steps in the order written, and one skilled in the art can readily appreciate that the sequences may be varied and still remain within the scope of the claims.

## Claims

1. A system for band-pass filtering ions from a mass range, comprising:
a tandem mass spectrometer that includes a mass analyzer, that can perform scans at different mass selection window widths using different tuning parameter values, and that is configured to perform a full scan of a mass range, wherein the full scan comprises a prescan; and
a processor in communication with the tandem mass spectrometer that is configured to:
receive a full spectrum for the full scan comprising the prescan from the tandem mass spectrometer,
from the full spectrum, identify for removal ions that produce saturation in a detector sub-system of the mass analyser,
select a first mass selection window of the full spectrum and select a first set of tuning parameter values,
instruct the tandem mass spectrometer to perform a first scan of the first mass selection window using the first set of tuning parameter values,
receive a first spectrum for the first scan from the tandem mass spectrometer,
create a band-pass filtered spectrum for the mass range that includes values from the first spectrum for the first mass selection window of the mass range;
select one or more additional mass selection windows of the full spectrum and select one or more additional sets of tuning parameter values, wherein the first mass selection window and the one or more additional mass selection windows do not overlap in the full spectrum,
instruct the tandem mass spectrometer to perform one or more scans of the one or more additional mass selection windows using the one or more additional sets of tuning parameter values,
receive one or more spectra for the one or more scans from the tandem mass spectrometer, and
add, to the band-pass filtered spectrum, values from the one or more spectra for the one or more additional mass selection windows of the mass range;
wherein each mass selection window is selected to not include an ion identified for removal and to allow ions other than said ion identified for removal to be scanned.

2. The system of any one of the preceding claims, wherein the full scan comprises a previous survey scan.

3. The system of any one of the preceding claims, wherein the processor is configured to identify for removal ions that produce saturation in the detector sub-system by identifying ions in the full spectrum that have an ion count rate that exceeds a total ion count rate of the detector sub-system.

4. The system of any one of the preceding claims, wherein the processor is configured to identify for removal ions that produce saturation in the detector sub-system by identifying ions in the full spectrum that have an intensity that exceeds a threshold intensity of the detector sub-system.

5. The system of any one of the preceding claims, wherein the tuning parameters include a maximum total ion current.

6. The system of any one of the preceding claims, wherein the tuning parameters include a maximum intensity.

7. A method for band-pass filtering ions from a mass range, comprising:
receiving a full spectrum for a full scan of a mass range using a tandem mass spectrometer that includes a mass analyzer and that can perform scans at different mass selection window widths using different tuning parameter values, wherein the full scan comprises a prescan;
from the full spectrum, identifying for removal precursor ions that produce saturation in a detector sub-system of the mass analyser using a processor;
selecting a first mass selection window of the full spectrum and selecting a first set of tuning parameter values; instructing the tandem mass spectrometer to perform a first scan of the first mass selection window using the first set of tuning parameter values;
receiving a first spectrum for the first scan from the tandem mass spectrometer;
creating a band-pass filtered spectrum for the mass range that includes values from the first spectrum for the first mass selection window of the mass range;
selecting one or more additional mass selection windows of the full spectrum and selecting one or more additional sets of tuning parameter values, wherein the first mass selection window and the one or more additional mass selection windows do not overlap in the full spectrum,
instructing the tandem mass spectrometer to perform one or more scans of the one or more additional mass selection windows using the one or more additional sets of tuning parameter values,
receiving one or more spectra for the one or more scans from the tandem mass spectrometer, and
adding, to the band-pass filtered spectrum, values from the one or more spectra for the one or more additional mass selection windows of the mass range;
wherein each mass selection window is selected to not include an ion identified for removal and to allow ions other than said ion identified for removal to be scanned.

8. The method of claim 8, wherein the full scan comprises a previous survey scan.

9. The method of any one of claims 5 or 6, wherein the identifying step comprises identifying ions in the full spectrum that have an ion count rate that exceeds a total ion count rate of the detector sub-system.

10. The method of any one of claims 5 to 7, wherein the identifying step comprises identifying ions in the full spectrum that have an intensity that exceeds a threshold intensity of the detector sub-system.

11. A computer program product, comprising a tangible computer-readable storage medium whose contents include a program with instructions to be executed on a processor so as to perform a method for band-pass filtering ions from a mass range, the method comprising:
providing a system, wherein the system comprises one or more distinct software modules, and wherein the distinct software modules comprise a measurement module and a filtering module;
receiving a full spectrum for a full scan of a mass range using a tandem mass spectrometer that includes a mass analyzer and that can perform scans at different mass selection window widths using different tuning parameter values using the measurement module, wherein the full scan comprises a prescan;
from the full spectrum, identifying for removal precursor ions that produce saturation in a detector sub-system of the mass analyser using a processor;
selecting a first mass selection window of the full spectrum and selecting a first set of tuning parameter values using the filtering module; instructing the tandem mass spectrometer to perform a first scan of the first mass selection window using the first set of tuning parameter values using the measurement module;
receiving a first spectrum for the first scan from the tandem mass spectrometer using the measurement module;
creating a band-pass filtered spectrum for the mass range that includes values from the first spectrum for the first mass selection window of the mass range using the filtering module;
selecting one or more additional mass selection windows of the full spectrum and selecting one or more additional sets of tuning parameter values, wherein the first mass selection window and the one or more additional mass selection windows do not overlap in the full spectrum,
instructing the tandem mass spectrometer to perform one or more scans of the one or more additional mass selection windows using the one or more additional sets of tuning parameter values,
receiving one or more spectra for the one or more scans from the tandem mass spectrometer, and
adding, to the band-pass filtered spectrum, values from the one or more spectra for the one or more additional mass selection windows of the mass range;
wherein each mass selection window is selected to not include an ion identified for removal and to allow ions other than said ion identified for removal to be scanned.

## Patentansprüche

1. System zum Bandpassfiltern von Ionen aus einem Massenbereich, das Folgendes umfasst:
ein Tandem-Massenspektrometer, das einen Massenanalysator umfasst, der Scans bei verschiedenen Massenauswahlfensterbreiten unter Verwendung verschiedener Abstimmungsparameterwerte durchführen kann, und das dafür konfiguriert ist, einen vollständigen Scan eines Massenbereichs durchzuführen, wobei der vollständige Scan einen Vorscan umfasst; und
einen Prozessor in Kommunikation mit dem Tandem-Massenspektrometer, der für Folgendes konfiguriert ist:
Empfangen eines vollständigen Spektrums für den vollständigen Scan, das den Vorscan von dem Tandem-Massenspektrometer umfasst,
Identifizieren, aus dem vollständigen Spektrum, von Entfernungsionen, die in einem Detektorsubsystem des Massenanalysators eine Sättigung erzeugen,
Auswählen eines ersten Massenauswahlfensters des vollständigen Spektrums und eines ersten Satzes von Abstimmparameterwerten,
Anweisen des Tandem-Massenspektrometers, einen ersten Scan des ersten Massenauswahlfensters unter Verwendung des ersten Satzes von Ab stimmparameterwerten durchzuführen,
Empfangen eines ersten Spektrums für den ersten Scan von dem Tandem-Massenspektrometer,
Erstellen eines bandpassgefilterten Spektrums für den Massenbereich, das Werte aus dem ersten Spektrum für das erste Massenauswahlfenster des Massenbereichs umfasst;
Auswählen eines oder mehrerer zusätzlicher Massenauswahlfenster des vollständigen Spektrums und Auswählen eines oder mehrerer zusätzlicher Sätze von Abstimmparameterwerten, wobei sich das erste Massenauswahlfenster und das eine oder die mehreren zusätzlichen Massenauswahlfenster nicht in dem vollständigen Spektrum überlappen,
Anweisen des Tandem-Massenspektrometers, einen oder mehrere Scans des einen oder der mehreren zusätzlichen Massenauswahlfenster unter Verwendung des einen oder der mehreren zusätzlichen Sätze von Abstimmparameterwerten durchzuführen,
Empfangen eines oder mehrerer Spektren für den einen oder die mehreren Scans von dem Tandem-Massenspektrometer und
Hinzufügen, zu dem bandpassgefilterten Spektrum, von Werten aus dem einen oder den mehreren Spektren für das eine oder die mehreren zusätzlichen Massenauswahlfenster des Massenbereichs;
wobei jedes Massenauswahlfenster so ausgewählt ist, dass es kein zur Entfernung identifiziertes Ion umfasst und dass andere Ionen als das zur Entfernung identifizierte Ion gescannt werden können.

2. System nach einem der vorhergehenden Ansprüche, wobei der vollständige Scan einen vorherigen Vermessungsscan umfasst.

3. System nach einem der vorhergehenden Ansprüche, wobei der Prozessor dafür konfiguriert ist, Ionen zu entfernen, die eine Sättigung im Detektorsubsystem erzeugen, durch Identifizieren von Ionen im vollständigen Spektrum, deren Ionenzählrate eine Gesamtionenzählrate des Detektorsubsystems überschreitet.

4. System nach einem der vorhergehenden Ansprüche, wobei der Prozessor dafür konfiguriert ist, Ionen zu entfernen, die eine Sättigung im Detektorsubsystem erzeugen, durch Identifizieren von Ionen im vollständigen Spektrum, deren Intensität eine Schwellenintensität des Detektorsubsystems überschreitet.

5. System nach einem der vorhergehenden Ansprüche, wobei die Abstimmparameter einen maximalen Gesamtionenstrom enthalten.

6. System nach einem der vorhergehenden Ansprüche, wobei die Abstimmungsparameter eine maximale Intensität umfassen.

7. Verfahren zum Bandpassfiltern von Ionen aus einem Massenbereich, das Folgendes umfasst:
Empfangen eines vollständigen Spektrums für einen vollständigen Scan eines Massenbereichs unter Verwendung eines Tandem-Massenspektrometers, das einen Massenanalysator umfasst, und das Scans bei verschiedenen Massenauswahlfensterbreiten unter Verwendung verschiedener Abstimmungsparameterwerte durchführen kann, wobei der vollständige Scan einen Vorscan umfasst;
Identifizieren, aus dem vollständigen Spektrum, von Entfernungsvorläuferionen, die unter Verwendung eines Prozessors in einem Detektorsubsystem des Massenanalysators eine Sättigung erzeugen,
Auswählen eines ersten Massenauswahlfensters des vollständigen Spektrums und eines ersten Satzes von Abstimmparameterwerten; Anweisen des Tandem-Massenspektrometers, einen ersten Scan des ersten Massenauswahlfensters unter Verwendung des ersten Satzes von Abstimmparameterwerten durchzuführen;
Empfangen eines ersten Spektrums für den ersten Scan von dem Tandem-Massenspektrometer;
Erstellen eines bandpassgefilterten Spektrums für den Massenbereich, das Werte aus dem ersten Spektrum für das erste Massenauswahlfenster des Massenbereichs umfasst;
Auswählen eines oder mehrerer zusätzlicher Massenauswahlfenster des vollständigen Spektrums und Auswählen eines oder mehrerer zusätzlicher Sätze von Abstimmparameterwerten, wobei sich das erste Massenauswahlfenster und das eine oder die mehreren zusätzlichen Massenauswahlfenster nicht in dem vollständigen Spektrum überlappen,
Anweisen des Tandem-Massenspektrometers, einen oder mehrere Scans des einen oder der mehreren zusätzlichen Massenauswahlfenster unter Verwendung des einen oder der mehreren zusätzlichen Sätze von Abstimmparameterwerten durchzuführen,
Empfangen eines oder mehrerer Spektren für den einen oder die mehreren Scans von dem Tandem-Massenspektrometer und
Hinzufügen, zu dem bandpassgefilterten Spektrum, von Werten aus dem einen oder den mehreren Spektren für das eine oder die mehreren zusätzlichen Massenauswahlfenster des Massenbereichs;
wobei jedes Massenauswahlfenster so ausgewählt ist, dass es kein zur Entfernung identifiziertes Ion umfasst und dass andere Ionen als das zur Entfernung identifizierte Ion gescannt werden können.

8. Verfahren nach Anspruch 8, wobei der vollständige Scan einen vorherigen Vermessungsscan umfasst.

9. Verfahren nach einem der Ansprüche 5 oder 6, wobei der Identifizierungsschritt das Identifizieren von Ionen im vollständigen Spektrum umfasst, deren Ionenzählrate eine Gesamtionenzählrate des Detektorsubsystems überschreitet.

10. Verfahren nach einem der Ansprüche 5 bis 7, wobei der Identifizierungsschritt das Identifizieren von Ionen im vollständigen Spektrum umfasst, deren Intensität eine Schwellenintensität des Detektorsubsystems überschreitet.

11. Computerprogrammprodukt, das ein physikalisches computerlesbares Speichermedium umfasst, dessen Inhalt ein Programm mit Anweisungen umfasst, die auf einem Prozessor ausgeführt werden, um ein Verfahren zum Bandpassfiltern von Ionen aus einem Massenbereich durchzuführen, wobei das Verfahren Folgendes umfasst:
Bereitstellen eines Systems, wobei das System ein oder mehrere verschiedene Softwaremodule umfasst, und wobei die verschiedenen Softwaremodule ein Messmodul und ein Filtermodul umfassen;
Empfangen eines vollständigen Spektrums für einen vollständigen Scan eines Massenbereichs unter Verwendung eines Tandem-Massenspektrometers, das einen Massenanalysator umfasst, und das Scans bei verschiedenen Massenauswahlfensterbreiten unter Verwendung verschiedener Abstimmungsparameterwerte unter Verwendung des Messmoduls durchführen kann, wobei der vollständige Scan einen Vorscan umfasst;
Identifizieren, aus dem vollständigen Spektrum, von Entfernungsvorläuferionen, die unter Verwendung eines Prozessors in einem Detektorsubsystem des Massenanalysators eine Sättigung erzeugen,
Auswählen eines ersten Massenauswahlfensters des vollständigen Spektrums und eines ersten Satzes von Abstimmparameterwerten unter Verwendung des Filtermoduls; Anweisen des Tandem-Massenspektrometers, einen ersten Scan des ersten Massenauswahlfensters unter Verwendung des ersten Satzes von Abstimmparameterwerten unter Verwendung des Messmoduls durchzuführen;
Empfangen eines ersten Spektrums für den ersten Scan von dem Tandem-Massenspektrometer unter Verwendung des Messmoduls;
Erstellen unter Verwendung des Filtermoduls eines bandpassgefilterten Spektrums für den Massenbereich, das Werte aus dem ersten Spektrum für das erste Massenauswahlfenster des Massenbereichs umfasst;
Auswählen eines oder mehrerer zusätzlicher Massenauswahlfenster des vollständigen Spektrums und Auswählen eines oder mehrerer zusätzlicher Sätze von Abstimmparameterwerten, wobei sich das erste Massenauswahlfenster und das eine oder die mehreren zusätzlichen Massenauswahlfenster nicht in dem vollständigen Spektrum überlappen,
Anweisen des Tandem-Massenspektrometers, einen oder mehrere Scans des einen oder der mehreren zusätzlichen Massenauswahlfenster unter Verwendung des einen oder der mehreren zusätzlichen Sätze von Abstimmparameterwerten durchzuführen,
Empfangen eines oder mehrerer Spektren für den einen oder die mehreren Scans von dem Tandem-Massenspektrometer und
Hinzufügen, zu dem bandpassgefilterten Spektrum, von Werten aus dem einen oder den mehreren Spektren für das eine oder die mehreren zusätzlichen Massenauswahlfenster des Massenbereichs;
wobei jedes Massenauswahlfenster so ausgewählt ist, dass es kein zur Entfernung identifiziertes Ion umfasst und dass andere Ionen als das zur Entfernung identifizierte Ion gescannt werden können.

## Revendications

1. Système de filtrage passe-bande d'ions à partir d'une plage de masse, comprenant :
un spectromètre de masse en tandem qui comprend un analyseur de masse, qui peut effectuer des balayages à différentes largeurs de fenêtre de sélection de masse en utilisant différentes valeurs de paramètres de réglage, et qui est configuré pour effectuer un balayage complet d'une plage de masse, le balayage complet comprenant un pré-balayage ; et
un processeur en communication avec le spectromètre de masse en tandem qui est configuré pour :
recevoir un spectre complet pour le balayage complet comprenant le pré-balayage à partir du spectromètre de masse en tandem,
à partir du spectre complet, identifier pour l'élimination des ions qui produisent une saturation dans un sous-système de détecteur de l'analyseur de masse,
sélectionner une première fenêtre de sélection de masse du spectre complet et sélectionner un premier ensemble de valeurs de paramètres de réglage,
demander au spectromètre de masse en tandem d'effectuer un premier balayage de la première fenêtre de sélection de masse en utilisant le premier ensemble de valeurs de paramètres de réglage,
recevoir un premier spectre pour le premier balayage à partir du spectromètre de masse en tandem,
créer un spectre filtré passe-bande pour la plage de masse qui comprend des valeurs du premier spectre pour la première fenêtre de sélection de masse de la plage de masse ;
sélectionner une ou plusieurs fenêtres de sélection de masse supplémentaires du spectre complet et sélectionner un ou plusieurs ensembles supplémentaires de valeurs de paramètres de réglage, dans lequel la première fenêtre de sélection de masse et l'une ou plusieurs fenêtres de sélection de masse supplémentaires ne se chevauchent pas dans le spectre complet,
demander au spectromètre de masse en tandem d'effectuer un ou plusieurs balayages de l'une ou plusieurs fenêtres de sélection de masse supplémentaires en utilisant l'un ou plusieurs ensembles supplémentaires de valeurs de paramètres de réglage,
recevoir un ou plusieurs spectres pour l'un ou plusieurs balayages à partir du spectromètre de masse en tandem, et
ajouter, au spectre filtré passe-bande, les valeurs de l'un ou plusieurs spectres pour l'une ou plusieurs fenêtres de sélection de masse supplémentaires de la plage de masse ;
dans lequel chaque fenêtre de sélection de masse est sélectionnée pour ne pas inclure un ion identifié pour l'élimination et pour permettre à des ions autres que ledit ion identifié pour l'élimination d'être balayés.

2. Système selon l'une quelconque des revendications précédentes, dans lequel le balayage complet comprend un balayage de sondage précédent.

3. Système selon l'une quelconque des revendications précédentes, dans lequel le processeur est configuré pour identifier pour l'élimination des ions qui produisent une saturation dans le sous-système de détecteur en identifiant les ions dans le spectre complet qui ont un taux de comptage d'ions qui dépasse un taux de comptage total d'ions du sous-système de détecteur.

4. Système selon l'une quelconque des revendications précédentes, dans lequel le processeur est configuré pour identifier pour l'élimination des ions qui produisent une saturation dans le sous-système de détecteur en identifiant les ions dans le spectre complet qui ont une intensité qui dépasse une intensité seuil du sous-système de détecteur.

5. Système selon l'une quelconque des revendications précédentes, dans lequel les paramètres de réglage comprennent un courant ionique total maximal.

6. Système selon l'une quelconque des revendications précédentes, dans lequel les paramètres de réglage comprennent une intensité maximale.

7. Procédé de filtrage passe-bande d'ions d'une plage de masse, comprenant :
la réception d'un spectre complet pour un balayage complet d'une plage de masse à l'aide d'un spectromètre de masse en tandem qui comprend un analyseur de masse et qui peut effectuer des balayages à différentes largeurs de fenêtre de sélection de masse en utilisant différentes valeurs de paramètres de réglage, dans lequel le balayage complet comprend un pré-balayage ;
à partir du spectre complet, l'identification pour l'élimination des ions précurseurs qui produisent une saturation dans un sous-système de détecteur de l'analyseur de masse à l'aide d'un processeur ;
la sélection d'une première fenêtre de sélection de masse du spectre complet et la sélection d'un premier ensemble de valeurs de paramètres de réglage ;
la demande au spectromètre de masse en tandem d'effectuer un premier balayage de la première fenêtre de sélection de masse en utilisant le premier ensemble de valeurs de paramètres de réglage ;
la réception d'un premier spectre pour le premier balayage à partir du spectromètre de masse en tandem ;
la création d'un spectre filtré passe-bande pour la plage de masse qui comprend des valeurs du premier spectre pour la première fenêtre de sélection de masse de la plage de masse ;
la sélection d'une ou plusieurs fenêtres de sélection de masse supplémentaires du spectre complet et la sélection d'un ou plusieurs ensembles supplémentaires de valeurs de paramètres de réglage, dans lequel la première fenêtre de sélection de masse et l'une ou plusieurs fenêtres de sélection de masse supplémentaires ne se chevauchent pas dans le spectre complet,
la demande au spectromètre de masse en tandem d'effectuer un ou plusieurs balayages de l'une ou plusieurs fenêtres de sélection de masse supplémentaires en utilisant un ou plusieurs ensembles supplémentaires de valeurs de paramètres de réglage,
la réception d'un ou plusieurs spectres pour l'un ou plusieurs balayages du spectromètre de masse en tandem, et
l'ajout, au spectre filtré passe-bande, des valeurs de l'un ou plusieurs spectres pour l'une ou plusieurs fenêtres de sélection de masse supplémentaires de la plage de masse ;
dans lequel chaque fenêtre de sélection de masse est sélectionnée pour ne pas inclure un ion identifié pour l'élimination et pour permettre à des ions autres que ledit ion identifié pour l'élimination d'être balayés.

8. Procédé selon la revendication 8, dans lequel le balayage complet comprend un balayage de sondage précédent.

9. Procédé selon l'une quelconque des revendications 5 ou 6, dans lequel l'étape d'identification comprend l'identification d'ions dans le spectre complet qui ont un taux de comptage d'ions qui dépasse un taux de comptage d'ions total du sous-système de détecteur.

10. Procédé selon l'une quelconque des revendications 5 à 7, dans lequel l'étape d'identification comprend l'identification d'ions dans le spectre complet qui ont une intensité qui dépasse une intensité seuil du sous-système de détecteur.

11. Produit programme d'ordinateur, comprenant un support de stockage tangible lisible par ordinateur dont le contenu comprend un programme avec des instructions à exécuter sur un processeur afin de mettre en œuvre un procédé de filtrage passe-bande d'ions à partir d'une plage de masse, le procédé comprenant :
la fourniture d'un système, dans lequel le système comprend un ou plusieurs modules logiciels distincts, et dans lequel les modules logiciels distincts comprennent un module de mesure et un module de filtrage ;
la réception d'un spectre complet pour un balayage complet d'une plage de masse à l'aide d'un spectromètre de masse en tandem qui comprend un analyseur de masse et qui peut effectuer des balayages à différentes largeurs de fenêtre de sélection de masse en utilisant différentes valeurs de paramètres de réglage en utilisant le module de mesure, dans lequel le balayage complet comprend un pré-balayage ;
à partir du spectre complet, l'identification pour l'élimination des ions précurseurs qui produisent une saturation dans un sous-système de détecteur de l'analyseur de masse à l'aide d'un processeur ;
la sélection d'une première fenêtre de sélection de masse du spectre complet et la sélection d'un premier ensemble de valeurs de paramètres de réglage en utilisant le module de filtrage ; la demande au spectromètre de masse en tandem d'effectuer un premier balayage de la première fenêtre de sélection de masse en utilisant le premier ensemble de valeurs de paramètres de réglage en utilisant le module de mesure ;
la réception d'un premier spectre pour le premier balayage à partir du spectromètre de masse en tandem en utilisant le module de mesure ;
la création un spectre filtré passe-bande pour la plage de masse qui comprend des valeurs du premier spectre pour la première fenêtre de sélection de masse de la plage de masse en utilisant le module de filtrage ;
la sélection d'une ou plusieurs fenêtres de sélection de masse supplémentaires du spectre complet et la sélection d'un ou plusieurs ensembles supplémentaires de valeurs de paramètres de réglage, dans lequel la première fenêtre de sélection de masse et l'une ou plusieurs fenêtres de sélection de masse supplémentaires ne se chevauchent pas dans le spectre complet,
la demande au spectromètre de masse en tandem d'effectuer un ou plusieurs balayages de l'une ou plusieurs fenêtres de sélection de masse supplémentaires en utilisant un ou plusieurs ensembles supplémentaires de valeurs de paramètres de réglage,
la réception d'un ou plusieurs spectres pour l'un ou plusieurs balayages à partir du spectromètre de masse en tandem, et
l'ajout, au spectre filtré passe-bande, des valeurs de l'un ou plusieurs spectres pour l'une ou plusieurs fenêtres de sélection de masse supplémentaires de la plage de masse ;
dans lequel chaque fenêtre de sélection de masse est sélectionnée pour ne pas inclure un ion identifié pour l'élimination et pour permettre à des ions autres que ledit ion identifié pour l'élimination d'être balayés.
